(19) Europäisches Patentamt
European Patent Office
Office européen des brevets

(11) **EP 4 155 046 A1**

(12) **EUROPEAN PATENT APPLICATION**

(43) Date of publication:
**29.03.2023 Bulletin 2023/13**

(21) Application number: **21217381.9**

(22) Date of filing: **23.12.2021**

(51) International Patent Classification (IPC):
**B29C 44/56** (2006.01)   **B32B 38/00** (2006.01)
**B29D 99/00** (2010.01)   **B29L 9/00** (2006.01)

(52) Cooperative Patent Classification (CPC):
**B29C 44/5627; B29C 65/48; B29D 99/0021;**
B29L 2009/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
• **THEUNISSEN, Mark, Leo, Hendrik
6160 GA Geleen (NL)**
• **VAN DER VEN, Emanuel, Joseph, Herman, Marie
6160 GA Geleen (NL)**
• **BACKER, Jan Adolph Dam
6160 AG GELEEN (NL)**

(74) Representative: **Sabic Intellectual Property Group
Sabic Intellectual Property Department
P.O. Box 3008
6160 GA Geleen (NL)**

(54) **FOAMED ASSEMBLY**

(57)    Provided is an assembly comprising a plurality of elongated foamed elements that are arranged next to one another in one plane and bonded to one another at abutting side faces thereof,
wherein the elongated foamed elements have been made by cutting at least one foamed sheet having a top surface and a bottom surface, the at least one foamed sheet having been prepared by a foamed extrusion process and the foamed sheet comprises a polymer composition comprising polypropylene,
wherein the cutting is perpendicular to the top surface and the bottom surface of the at least one foamed sheet, preferably in a direction parallel to an extrusion direction of the foamed sheet or a direction transverse to the extrusion direction, wherein the assembly has a top surface and a bottom surface which are formed of surfaces of the elongated foamed elements that are perpendicular to the top or the bottom surface of one of the at least one foamed sheet from which the respective elongated foamed element has been made.

Fig. 1(a)

Fig. 1(b)

Fig. 1(c)

Fig. 1(d)

**EP 4 155 046 A1**

**Description**

The present invention relates to an assembly, preferably a sheet, comprising foamed elements and a process for making such assembly. The invention further relates to a multilayer composite comprising such assembly and a process for making such multilayer composite. The invention further relates to an article comprising such multilayer composite, in particular panels for buildings or transportation vehicles.

It is known to use a multilayer composite comprising two face sheets and one core layer as insulation panels, roof panels, wall panels and floor panels. These panels are used in various industries such as transportation and building & construction. Examples of the articles using these panels include walls for trucks, insulated rooftops of houses and constructions for housing of electronics.

The face sheets are visible on the outside of the multilayer composite and the core layers is in between the face sheets. Sometimes in-between layers are used, like for instance adhesive layers.

Examples of face sheets are plywood, MDF (medium-density fiberboard) or fiberglass reinforced layers. The core layer is often a foam, for instance Polystyrene foam (PS), Polyurethane foam (PUR) or Polyester foam (PET). In some cases, a wooden construction is further applied to the face sheet to strengthen the construction.

Traditional floor sandwich panels that are used in mobile homes are produced manually. The production starts with a wooden construction that is put together via screws and glue. The gaps in between the wooden construction are filled with a PS foam core layer. This core layer is covered by multiplex layers, which are connected to the core layer via screws and nails.

Mechanical properties such as compression strength, shear strength and bending stiffness are important for these panels for buildings and transportation vehicles. In addition, screw-ability and screw retention forces are important for the production process and durability and applications of these panels. In addition, the weight and future recycling of the panels are of importance.

There is a need in the industry for panels for buildings and transportation and recreation vehicles having sufficient compression strength, which can be produced in an easier and more sustainable manner.

It is therefore an objective of the invention to provide a product by which the above-mentioned and/or other needs are met.

Accordingly, the invention provides an assembly comprising a plurality of elongated foamed elements that are arranged next to one another in one plane and bonded to one another at abutting side faces thereof,

wherein the elongated foamed elements have been made by cutting at least one foamed sheet having a top surface and a bottom surface, the at least one foamed sheet having been prepared by a foamed extrusion process and the foamed sheet comprises a polymer composition comprising polypropylene,
wherein the cutting is perpendicular to the top surface and the bottom surface of the at least one foamed sheet, preferably in a direction parallel to an extrusion direction of the foamed sheet or a direction transverse to the extrusion direction,
wherein the assembly has a top surface and a bottom surface which are formed of surfaces of the elongated foamed elements that are perpendicular to the top or the bottom surface of one of the at least one foamed sheet from which the respective elongated foamed element has been made,
preferably wherein the assembly is a sheet.

The invention is based on the surprising finding that a foamed sheet made by a foamed extrusion process has an anisotropic performance in the compression strength, i.e. the compression strength in the thickness direction (also referred to herein as perpendicular direction or PD or H), the extrusion direction (also referred herein as machine direction or MD) and the direction transverse to the extrusion direction (also referred to herein as transverse direction or TD) of the foamed sheet are different. The compression strength in the extrusion direction or the transverse direction of the foamed sheet was found to be much larger than the compression strength in the thickness direction of the foamed sheet, the compression strength in the extrusion direction being larger than the compression strength in the transverse direction.

Although not wishing to be bound by any theory, the anisotropic compression strength may be due to the molecular orientation of polypropylene caused during the extrusion process. The shape of the pores may further play a role. The anisotropy of the compression strength may be enhanced when the foamed sheet has pores which have an anisotropic shape, e.g. an ellipsoidal shape having a larger dimension in the extrusion direction than in the transverse direction which in turn is larger than in the thickness direction.

Perpendicular within the scope of the present application means that a plane or line is oriented with respect to the other plane or line at an angle at least substantially equal to 90 degrees, for example 85 to 95 degrees. Similarly, parallel within the scope of the present application means that a plane or line is oriented with respect to the other plane or line at an angle at least substantially equal to 0 degrees, for example 0 to 5 degrees. Thus, cutting perpendicular to the top surface and the bottom surface within the scope of the present application means that the cutting plane is oriented at least substantially equal to 90 degrees, for example 85 to 95 degrees, to the top surface and the bottom surface.

For the avoidance of doubt, "the compression strength in the thickness direction" (sometimes referred as compression strength in H or compression strength in PD) is understood as the as the stress that is observed in a compression test in the PD direction; "the compression strength in the extrusion direction" (sometimes referred as compression strength in MD) is understood as the as the stress that is observed in a compression test in the MD direction; and "the compression strength in the transverse direction" (sometimes referred as compression strength in TD) is understood as the as the stress that is observed in a compression test in the TD direction.

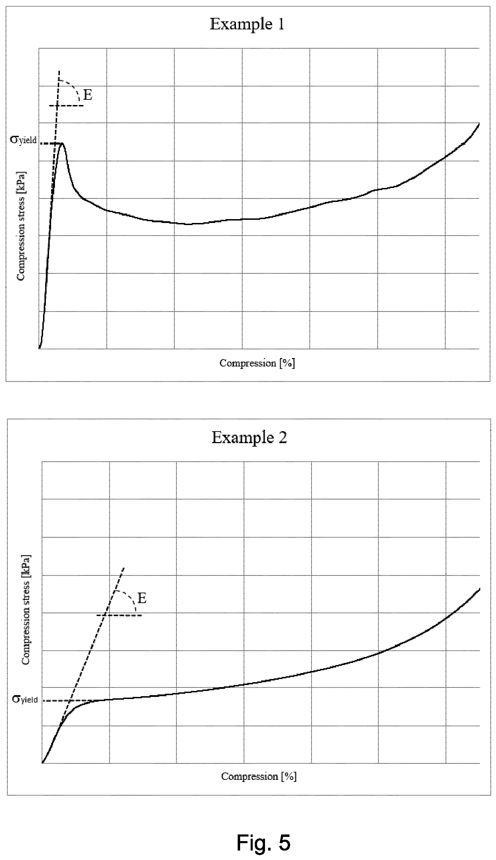

In particular, the compression strength may refer to the compression stress at yield observed at a compression of typically between 0.1% and 15%, where the slope of the stress-compression curve changes strongly from high to low as illustrated in figure 5. In Example 1 illustrated in figure 5, the compression stress at yield ($\sigma$yield) is the compression stress at the peak of the stress-compression curve. In Example 2 illustrated in figure 5, the compression stress at yield ($\sigma$yield) is the compression stress at a point where the the slope of the stress-compression curve becomes close to zero.

The present inventors realized that such foamed sheet can be converted into an assembly (such as a new sheet) having a larger compression strength by cutting such foamed sheet into elongated (e.g. beam-shaped) foamed elements and rearranging the elongated foamed elements.

According to the invention, the elongated foamed elements can be turned sideways such that their faces created by the cutting would face up and down, i.e. the surfaces facing sideways in the assembly according to the invention are part of or parallel to the top or the bottom surface of the foamed sheet. The elongated foamed elements can be arranged next to each other to obtain an assembly (a new sheet) having top and bottom surfaces formed by the surfaces of the elongated foamed elements created by the cutting. The assembly so obtained has a compression strength in the thickness direction which corresponds to the compression strength of the foamed sheet in the extrusion direction or in the transverse direction, i.e. much higher than the compression strength of the foamed sheet in the thickness direction.

The present invention accordingly provides an assembly in particular a sheet having a high compression strength in the thickness direction while maintaining all advantages of a foamed polypropylene sheet such as low density.

In some embodiments, the cutting of the foamed sheet is performed only perpendicular to the top surface and the bottom surface of the at least one foamed sheet. In this case, the abutting side faces of the elongated foamed elements in the assembly according to the invention were part of the top or the bottom surface of one of the at least one foamed sheet from which the respective elongated foamed element has been made.

In some embodiments, the foamed sheet may be further cut parallel to the top and bottom surfaces of the foamed sheet. In this case, the abutting side faces of the elongated foamed elements in the assembly according to the invention may also include surfaces made by said parallel cutting.

The present invention further provides a plurality of elongated foamed elements made by cutting at least one foamed sheet having a top surface and a bottom surface, the at least one foamed sheet having been prepared by a foamed extrusion process and the foamed sheet comprises polypropylene, wherein the cutting is perpendicular to the top surface and the bottom surface of the at least one foamed sheet, preferably in a direction parallel to an extrusion direction of the foamed sheet or a direction transverse to the extrusion direction. The kit of parts according to the invention can be bonded together to obtain the assembly according to the invention.

The present invention further provides a multilayer composite comprising a core layer and a first cover layer provided on the core layer, wherein the core layer comprises the assembly according to the invention. Preferably, the multilayer composite further comprises a second cover layer and the core layer is provided between the first cover layer and the second cover layer. Preferably, the first cover layer comprises a first composition comprising a polymer which is preferably polypropylene and optionally reinforcement fibers and the second cover layer comprises a second composition comprising a polymer which is preferably polypropylene and optionally reinforcement fibers. Although polypropylene is preferred as the polymer in the first composition and the polymer in the second composition, in some embodiments, the polymer in the first composition and the polymer in the second composition are not polypropylene, e.g. polyethylene or PET.

The use of the assembly of the invention as the core layer with cover layers that comprise compositions comprising polypropylene has an advantage that no adhesive layer is needed for bonding to the cover layers. As the multilayer composite is made of one type of polymer, this is highly advantageous from a recycling point of view. In some preferred embodiments, the first composition and the second composition do not comprise reinforcement fibers, in which case the recyclability is even more improved.

A sheet as defined herein is a shape which has a longer length than width, and a larger width than thickness. The thickness of the sheet may for example be $\geq 5\mu$m and $\leq 100$ cm, more typically from 0.1 mm to 10 cm.

In the context of the invention, with 'foamed' or 'foam' is meant that the material has a lower density due to the presence of gas bubbles (such as air) as compared to the density of the same material without gas bubbles.

Foamed sheet for making the article according to the invention

The assembly according to the invention is made from a foamed sheet made by a foamed extrusion process. The foamed sheet comprises a polymer composition comprising polypropylene.

Preferably, the polymer composition comprises a high melt strength polypropylene wherein the high melt strength polypropylene has a melt strength $\geq$ 30 cN, $\geq$ 35 cN, $\geq$ 40 cN, $\geq$ 45 cN, preferably $\geq$ 50 cN, more preferably $\geq$ 55 cN, even more preferably $\geq$ 60 cN, most preferably $\geq$ 65 cN, wherein the melt strength is determined in accordance with ISO 16790:2005 at a temperature of 200°C, using a cylindrical capillary having a length of 20mm and a width of 2mm, a starting velocity v0 of 9.8mm/s and an acceleration of 6mm/s$^2$.

Such foamed sheets show an increased overall bending and compression stiffness. This means that the high melt strength polypropylene in the foamed sheets allows for a) the production of foams that have an increased bending stiffness (same thickness) and b) for the production of foams using less raw material, while still achieving the same bending stiffness (lower thickness and/or lower foam density). The use of less raw material (down-gauging is advantageous from an environmental point of view in terms of carbon footprint (less material and less transport costs and energy) as well as from an economical (cost) perspective.

Preferably, the foamed sheet has a thickness of 5 mm to 10 cm.

high melt strength polypropylene

High melt strength polypropylene having a melt strength $\geq$ 30 cN, preferably $\geq$ 45 cN, can for example be obtained by the process as disclosed in WO2009/003930A1. WO2009/003930A1 discloses an irradiated polymer composition comprising at least one polyolefin resin and at least one non-phenolic stabilizer, wherein the irradiated polymer composition is produced by a process comprising mixing the polyolefin resin with the non-phenolic stabilizer and irradiating this mixture in a reduced oxygen environment. In addition, a high melt strength polypropylene having a melt strength $\geq$ 45 cN is available from SABIC as SABIC® PP UMS 561P as of 18 February 2021.

Preferably, the high melt strength polypropylene is prepared by

a) irradiation of a polypropylene with at least one non-phenolic stabilizer, preferably wherein the non-phenolic stabilizer is chosen from the group of hindered amines, wherein the irradiation is performed with $\geq$ 2.0 and $\leq$ 20 Megarad electron-beam radiation in a reduced oxygen environment, wherein the amount of active oxygen is $\leq$ 15% by volume with respect to the total volume of the reduced oxygen environment for a time sufficient for obtaining a long chain branched polypropylene and

b) deactivation of the free radicals in the long chain branched polypropylene to form the high melt strength polypropylene.

How to deactivate the free radicals is known in the art, for example by heating as described in WO2009003930A1.

Examples of non-phenolic stabilizers are known in the art and are for example disclosed on pages 37 - 60 of WO2009/003930A1, hereby incorporated by reference. Preferably, the non-phenolic stabiizer is chosen from the group of hindered amines. More preferably, the non-phenolic stabilizer comprises at least one hindered amine selected from the group of Chimassorb® 944, Tinuvin® 622, Chimassorb® 2020, Chimassorb® 119, Tinuvin® 770, and mixtures thereof, separate or in combination with at least one hydroxylamine, nitrone, amine oxide, or benzofuranone selected from N,N-di(hydrogenated tallow)amine (Irgastab® FS-042), an N,N- di(alkyl)hydroxylamine produced by a direct oxidation of N,N-di(hydrogenated tallow)amine (Irgastab® FS-042), N-octadecyl-$\alpha$-heptadecylnitrone, Genox™ EP, a di(C16 -C18 )alkyl methyl amine oxide, 3-(3,4-dimethylphenyl)-5,7-di-tert-butyl-benzofuran-2-one, Irganox® HP-136 (BFI), and mixtures thereof, and separate or in combination with at least one organic phosphite or phosphonite selected from tris(2,4-di-tert-butylphenyl) phosphite (Irgafos® 168). Even more preferably, the non-phenolic stabilizers of the present subject matter can include those described in U.S. Patents 6,664,317 and 6,872,764, both of which are incorporated herein by reference in their entirety.

Preferably, the melt strength of the high melt strength polypropylene is $\geq$ 50 cN, more preferably $\geq$ 55 cN, even more preferably $\geq$ 60 cN, most preferably $\geq$ 65 cN and/or preferably the melt strength of the high melt strength polypropylene is $\leq$ 100 cN, for example $\leq$ 95 cN, for example $\leq$ 90 cN, for example $\leq$ 87cN.

The melt strength of the high melt strength polypropylene is determined in accordance with ISO 16790:2005 at a temperature of 200°C, using a cylindrical capillary having a length of 20mm and a width of 2mm, a starting velocity v0 of 9.8mm/s and an acceleration of 6mm/s2.

With polypropylene as used herein is meant propylene homopolymer, a copolymer of propylene with an $\alpha$-olefin or a heterophasic propylene copolymer.

Preferably, the high melt strength polypropylene is polypropylene chosen from the group of propylene homopolymers and propylene copolymers comprising moieties derived from propylene and one or more comonomers chosen from the group of ethylene and alpha-olefins with $\geq 4$ and $\leq 12$ carbon atoms.

Preferably, the propylene copolymer comprises moieties derived from one or more comonomers chosen from the group of ethylene and alpha-olefins with $\geq 4$ and $\leq 12$ carbon atoms in an amount of $\leq 10wt\%$, for example in an amount of $\geq 1.0$ and $\leq 7.0wt\%$ based on the propylene copolymer, wherein the wt% is determined using $^{13}C$ NMR. For example, the propylene copolymer comprises moieties derived from one or more comonomer chosen from the group of ethylene, 1-butene, 1-pentene, 1-hexene, 4-methyl-1-pentene, 1-heptene, 1-octene, 1-decene and 1-dodecene, preferably moieties derived from ethylene.

Polypropylenes and the processes for the synthesis of polypropylenes are known. A propylene homopolymer is obtained by polymerizing propylene under suitable polymerization conditions. A propylene copolymer is obtained by copolymerizing propylene and one or more other comonomers, for example ethylene, under suitable polymerization conditions. The preparation of propylene homopolymers and copolymers is for example described in Moore, E. P. (1996) Polypropylene Handbook. Polymerization, Characterization, Properties, Processing, Applications, Hanser Publishers: New York.

Propylene homopolymers, propylene copolymers and heterophasic propylene copolymers can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

Preferably, the (high melt strength) polypropylene has a VOC value as determined in accordance with VDA278 (2011-10) $\leq 250$ $\mu g/g$, preferably a VOC value $\leq 50$ $\mu g/g$ and/or an FOG value as determined in accordance with VDA278 (2011-10) $\leq 500$ $\mu g/g$, preferably an FOG-value $\leq 100$ $\mu g/g$.

Preferably, the (high melt strength) polypropylene has a melt flow rate $\geq 0.50$ and $\leq 8.0$ g/10min, more preferably $\geq 0.70$ and $\leq 5.0$ g/10min, most preferably $\geq 1.0$ and $\leq 4.0$ g/10min as determined in accordance with ASTM D1238 (2013) at a temperature of 230°C under a load of 2.16 kg.

In some embodiments, the polypropylene in the polymer composition is a high melt strength polypropylene described in WO2017021292, p.2, 1.26 to p.15, 1.32, incorporated herein by reference. Suitable examples of commercially available products include Daploy™ WB140HMS from Borealis.

In some embodiments, the polypropylene in the polymer composition is a polypropylene commercially available as Achieve™ Advanced PP6302E1 from Exxon Mobil.

Preferably, the (high melt strength) polypropylene is present in an amount $\geq 10wt\%$ based on the polymer composition, preferably wherein the (high melt strength) polypropylene is present in an amount $\geq 10wt\%$ based on the polymer composition, more preferably in an amount $\leq 99.5$ wt% based on the polymer composition. For example, the amount of (high melt strength) strength polypropylene based on the polymer composition is $\geq 15wt\%$, $\geq 20wt\%$, $\geq 25wt\%$, preferably $\geq 30wt\%$ and/or $\leq 99.5wt\%$, $\leq 99$ wt%, $\leq 98.5wt\%$, $\leq 98.0wt\%$, $\leq 97.0wt\%$, $\leq 96.0wt\%$, $\leq 95.0wt\%$.

The polypropylene composition may comprise the (high melt strength) polypropylene in an amount of $\geq 95wt\%$, more preferably $\geq 96wt\%$, even more preferably $\geq 97wt\%$, even more preferably $\geq 98wt\%$, for example $\geq 99wt\%$, for example $\geq 99.6wt\%$, for example $\geq 99.8wt\%$, for example $\geq 99.9$ wt% based on the polymer composition.

The polymer composition may further comprise additives, such as for example flame retardants, pigments, lubricants, slip agents flow promoters, antistatic agents, processing stabilizers, long term stabilisers and/or UV stabilizers. The additives may be present in any desired amount to be determined by the man skilled in the art, but are preferably present $\geq 0.001$ wt% and $\leq 5.0$ wt%, more preferably $\geq 0.01$ wt% and $\leq 4.0$ wt%, even more preferably $\geq 0.01$ wt% and $\leq 3.0$ wt%, even more preferably $\geq 0.01$ wt% and $\leq 2.0$ wt% based on the polymer composition.

In one embodiment, the polymer composition further comprises a further polypropylene which does not have a melt strength $\geq 30$ cN, wherein the melt strength is determined in accordance with ISO 16790:2005 at a temperature of 200°C, using a cylindrical capillary having a length of 20mm and a width of 2mm, a starting velocity v0 of 9.8mm/s and an acceleration of 6mm/s2. Preferably the amount of such further polypropylene is $\geq 10$ wt% and $\leq 40$ wt% based on the polymer composition. The further polypropylene can be a propylene homopolymer, a propylene copolymer, for example a copolymer of propylene with an $\alpha$-olefin as described herein or a heterophasic propylene copolymer.

The polymer composition may further comprise a nucleating agent. A nucleating agent may be desired to increase the cell density and to modify the dynamics of bubble formation and growth. (Gendron, Thermoplastic foam Processing, 2005, page 209).

The amount of nucleating agent may for example be $\geq 0.010$ wt% and $\leq 5.0$ wt%, for example $\geq 0.030$ wt% and $\leq 4.0$ wt%, for example $\geq 0.050$ wt% and $\leq 3.0$ wt%, preferably $\geq 0.10$ wt% and $\leq 2.5$ wt%, more preferably $\geq 0.30$ wt% and $\leq 1.5$ wt% based on the polymer composition, most preferably $\geq 0.50$ wt% and $\leq 1.2wt\%$ based on the polymer composition.

Suitable nucleating agents include but are not limited to talc, silica and a mixture of sodium bicarbonate and citric acid. Other suitable nucleating agents include amides, for example azo dicarbonamide, amines and/or esters of a saturated or unsaturated aliphatic $(C_{10}-C_{34})$ carboxylic acid. Examples of suitable amides include fatty acid (bis)amides such as for example stearamide, caproamide, caprylamide, undecylamide, lauramide, myristamide, palmitamide, behenamide and arachidamide, hydroxystearamides and alkylenediyl-bis-alkanamides, preferably $(C_2-C_{32})$ alkylenediyl-bis-$(C_2-C_{32})$ alkanamides, such as for example ethylene bistearamide (EBS), butylene bistearamide, hexamethylene bistearamide, ethylene bisbehenamide and mixtures thereof. Suitable amines include or instance $(C_2-C_{18})$ alkylene diamines such as for example ethylene biscaproamine and hexamethylene biscaproamine. Preferred esters of a saturated or unsaturated aliphatic $(C_{10}-C_{34})$ carboxylic acid are the esters of an aliphatic $(C_{16}-C_{24})$ carboxylic acid. Preferably, the nucleating agent is chosen from the group of talc, sodium bicarbonate, citric acid, azodicarbonamide and mixtures thereof, more preferably, the nucleating agent is talc.

For the preparation of the foamed sheet, it may be desired to use a cell stabilizer. Cell stabilizers are permeability modifiers which retard the diffusion of for example hydrocarbons such as isobutane to create dimensionally stable foams. (Gendron, Thermoplastic foam Processing, 2005, pages 31 and 149) Preferred cell stabilizers include but are not limited to glycerol monostearate (GMS), glycerol monopalmitate (GMP), palmitides and/or amides. Suitable amides are for example stearyl stearamide, palmitide and/or stearamide. Suitable mixtures include for example a mixture comprising GMS and GMP or a mixture comprising stearamide and palmitamide. Preferably, in case a cell stabilizer is used, the cell stabilizer is glycerol monostearate or stearamide.

The amount of cell stabilizer to be added depends on desired cell size and the polymer composition used for the preparation of the foamed sheet. Generally, the cell stabiliser may be added in an amount $\geq 0.10$ and $\leq 3.0$ wt % relative to the polymer composition. Preferably, the polymer composition is present in the foamed sheet in an amount $\geq 95$ wt% based on the foamed sheet. For example, the polymer composition is present in the foamed sheet in an amount $\geq 96$ wt%, $\geq 97$ wt%, $\geq 98$ wt%, $\geq 99$ wt%, $\geq 99.5$ wt% based on the foamed sheet. The foamed sheet may also consist of the polymer composition.

Preferably, the density of the foamed sheet is $\leq 650$ kg/m$^3$ and $\geq 20$kg/m$^3$, preferably $\leq 500$ kg/m$^3$ and $\geq 30$kg/m$^3$, wherein the density is determined according to ISO 845 (2006).

Preferably, the foamed sheet has an open cell content of $\leq 15.0$ %, preferably $\leq 12.0$%, more preferably $\leq 10.0$%, even more preferably $\leq 7.0$%, even more preferably $\leq 5.0$%, even more preferably $\leq 4.0$%, even more preferably $\leq 3.0$%, even more preferably $\leq 2.0$%, wherein the open cell content is determined according to ASTM D6226-10.

Processes for the preparation of polypropylene foams and foamed sheets are within the knowledge of the person skilled in the art. In such a process, a melt of a composition of the high melt strength polypropylene mixed with a gaseous or liquid blowing agent is suddenly expanded through a pressure drop. Continuous foaming processes as well as discontinuous processes may be applied. In a continuous foaming process, the polymer composition is melted and laden with gas in an extruder under pressures typically above 20 bar before being extruded through a die where the pressure drop causes the formation of a foam. The mechanism of foaming polypropylene in such foam extrusion process is explained, for example, in H. E. Naguib, C. B. Park, N. Reichelt, Fundamental foaming mechanisms governing the volume expansion of extruded polypropylene foams, Journal of Applied Polymer Science, 91, 2661-2668 (2004). Processes for foaming are outlined in S. T. Lee, Foam Extrusion, Technomic Publishing (2000). In a discontinuous foaming process, the polypropylene composition (micro-)pellets are laden with foaming agent under pressure and heated below melting temperature before the pressure in the autoclave is suddenly relaxed. The dissolved foaming agent forms bubbles and creates a foam structure.

During the extrusion, parameters such as the die opening size and the pulling speed may be adjusted such that sufficient shear stress is applied to result in anisotropic properties, e.g. higher stiffness in the extrusion direction than the thickness direction, of the foamed sheet obtained.

Preferably, the foamed sheet is prepared by a process comprising the sequential steps of:

a) providing the polymer composition and
b) adding a blowing agent to the polymer composition, for example wherein the blowing agent is added in an amount $\geq 0.10$ wt% and $\leq 20$ wt% based on the polymer composition and
c) subjecting the mixture of the polymer composition and the blowing agent to a foam extrusion process to form the foamed sheet.

The amount of blowing agent for example depends on the desired density and the polymer composition used. For example, the blowing agent may be used in an amount $\geq 0.10$ wt% and $\leq 20$ wt% based on the polymer composition.

Examples of suitable physical blowing agents include, but are not limited to isobutane, $CO_2$, pentane, butane, nitrogen and/or a fluorohydrocarbon. Preferably, the physical blowing agent is isobutane and/or CO2, most preferably isobutane.

Examples of suitable chemical blowing agents include, but are not limited to citric acid or a citric acid-based material (e.g. mixtures of citric acid and sodium bicarbonate) and azo dicarbonamide. Such chemical blowing agents are for example commercially available from Clariant Corporation under for example the name Hydrocerol ™ CF-40E™ or Hydrocerol™ CF-05E™.

The foamed sheets thus prepared may be stretched monoaxially or biaxially using a manner known per se.

This further enhances the anisotropy of the compression strength of the foamed sheet.

Therefore, the foamed sheet may be prepared by a process comprising the sequential steps of:

a) providing the polymer composition of the invention and
b) adding a blowing agent to the polymer composition, for example wherein the blowing agent is added in an amount $\geq 0.10$ wt% and $\leq 20$ wt% based on the polymer composition and
c) subjecting the mixture of the polymer composition and the blowing agent to a foam extrusion process to form the foamed sheet and
d) stretching the foamed sheet in at least one direction.

The foamed sheet may be a foamed sheet which has been stretched in at least one direction, for example wherein the foamed sheet has been monoaxially stretched (for example in the machine direction) or for example the foamed sheet has been biaxially stretched, for example in both the machine direction (MD) and in the transverse direction (TD). As is known to the person skilled in the art, the stretching in MD and TD may be carried out simultaneously, or in consecutive steps.

The draw ratio in MD may for example be $\geq 1.1$ and $\leq 7.0$, for example $\geq 1.1$ and $\leq 3.0$. The draw ratio in transverse direction may for example be $\geq 1.1$ and $\leq 7.0$, for example $\geq 1.1$ and $\leq 3.0$.

Preferably, the assembly according to the invention has a compression stress at yield in the thickness direction of at least 100 kPa, more preferably at least 300 kPa, more preferably at least 500 kPa, as determined by ISO 844 (2014).

Multilayer composite

The multilayer composite according to the invention comprises a core layer comprising the article according to the invention, preferably the sheet according to the invention. The multilayer composite further comprises a first cover layer provided on the core layer. Preferably the multilayer composite further comprises a second cover layer on the opposite side of the core layer from the first cover layer. The core layer is thus provided between the first cover layer and the second cover layer. Preferred embodiments relate to a multilayer composite comprising a first cover layer, a second cover layer and a core layer provided between the first cover layer and the second cover layer, wherein the core layer comprises the sheet according to the invention.

Preferably, the assembly according to the invention of the core layer is directly bonded to the first cover layer and the optional second cover layer without an adhesive layer. The direct bonding may be achieved by thermal bonding.

Preferably, the multilayer composite according to the invention has a compression stress at yield in the thickness direction at least 100 kPa, more preferably at least 300 kPa, more preferably at least 500 kPa, as determined by ISO 844 (2014).

First and second cover layers

The first cover layer and/or the second cover layer may have a thickness of e.g. 0.1 to 4.0 mm, for example 0.3 to 2.0 mm.

The first cover layer comprises a first composition and the second cover layer comprises a second composition. The first composition and the second composition may be the same or different from each other.

Preferably, the first composition and/or the second composition is a non-foamed composition, more preferably the first composition is a non-foamed composition and the second composition is a non-foamed composition.

Preferably, the first composition and/or the second composition has a density of at least 903 g/cm$^3$, more preferably 904 g/cm$^3$, more preferably 905 g/cm$^3$.

Preferably, the first composition and/or the second composition comprises polypropylene and optionally reinforcement fibers.

In some embodiments, the reinforcement fibers may be glass fibers. In other embodiments, the reinforcement fibers may be selected from basalt fibers, carbon fibers, aramid fibers and natural fibers such as hemp, flax and bamboo fibers.

In some cases, the first composition and the second composition are free from reinforcement fibers. This is advantageous in view of recyclability.

Glass fibers

The glass fibers, as added to the composition, can comprise long and/or short glass fibers.

Compositions filled with short glass fibers can be made by mixing chopped strands of pre-determined length with a thermoplastic polymer in an extruder, during which the glass fibers are dispersed in the molten thermoplastic.

Compositions filled with long glass fibers can be made by a cable-wiring process, a co-mingling process or by a pultrusion process. The length of the added glass fibers can decrease during processing and as such the final length of the glass fibers in the composition and, in particular after compounding, can be less than that of the added glass fibers. Long glass fibers can have an average fiber length, before compounding, of 1 mm or more. Preferably, the long glass fibers can have an average fiber length, before compounding, of 1-50 mm, more preferably 1 -20 mm, and even more preferably 5-15 mm. Short glass fibers can have an average fiber length, before compounding, of 1 -10 mm, preferably 2-8 mm, more preferably 3-7 mm. The diameter of the glass fibers, before compounding, can be 5-50 $\mu$m, preferably 8-30 $\mu$m, more preferably 10-20 $\mu$m.

The aspect ratio of the fibers can for example be in the range of 200-2000, preferably in the range of 200-1000, such as in the range of 250-750. The aspect ratio refers to the ratio between the average fiber length and the average fiber diameter. Generally, the length of glass fibers in a polymer composition decreases during a melt processing step like injection moulding. The average length of the glass fibers in a moulded article made from the composition according to the invention, i.e. after compounding, is therefore typically significantly shorter. Typically, after compounding, the glass fibers have an average fiber length of 1 mm or less. Preferably, the average fiber length in a moulded article (after compounding) can be from 0.05-0.9 mm, more preferably 0.1 - 0.6 mm, even more preferably 0.1 -0.4 mm. Since the average glass fiber diameter does not substantially change upon compounding, the average glass fiber diameter in a moulded article made from the composition according to the invention, i.e. after compounding, can be in the range of 5-50 $\mu$m, preferably 8-30 $\mu$m, such as 10-20 $\mu$m.

Suitably, the glass fibers can be coated in order to improve the interaction with the polypropylene. Such coated glass fibers are also known in the art as sized glass fibers. Such coatings typically include amino-silane or silane coatings. Amino-silane and silane coated glass fibers are commercially available. Some examples include ECS03-480H (from NEG), 03T480 (from NEG), HP3270 (from PPG Industries), HP3299 (from PPG Industries), ECS 305H (from CPIC), ECS 305K (from CPIC), DS2100-13P (from Binani 3B fiberglass), DS2200-10P (from Binani 3B fiberglass), DS2200-13P (from Binani 3B fiberglass), OwensCorning SE4805 SE4850, SE4849 Type 30.

The glass fibers may be treated with a coupling agent so as to improve the interaction between the glass fibers and the polypropylene. Such coupling agents facilitate adhesion of the polypropylene to the polar glass fiber surface. Suitable coupling agents include functional organo-silanes, transition metal coupling agents, amino-containing Werner coupling agents and mixtures thereof. Examples of functional organo-silane coupling agents include 3-aminopropyld-imethylethoxysilane, $\gamma$-aminopropyltriethoxysilane, $\gamma$-aminopropyltrimethoxysilane, $\beta$-aminoethyltriethoxysilane, N-$\beta$-aminoethylamino-propyltrimethoxysilane, $\gamma$-isocyanatopropyltriethoxysilane, vinyl-trimethoxysilane, vinyl-triethoxysilane, allyltrimethoxysilane, mercaptopropyltrimethoxysilane, mercaptopropyltriethoxysilane, glycidoxypropyltriethoxysilane, glycidoxypropyltrimethoxysilane, 4.5-epoxycyclohexylethyltrimethoxysilane, ureidopropyltrimethoxysilane, ureidopropyltriethoxysilane, chloropropyltrimethoxysilane, and chloropropyltriethoxysilane. Examples of transition metal coupling agents include chrome, titanium and zirconium coupling agents.

Examples of amino-containing Werner type coupling agents include complex compounds in which a trivalent nuclear atom such as chromium is coordinated with an organic acid having amino functionality. Such treated glass fibers are known in the art. The amount of glass fibers in the thermoplastic composition can vary depending on the specific application and needs. For example, the amount of glass fibers in the thermoplastic composition may be 10-40 wt%, for example 20-30 wt% or 20-25 % based on the total composition.

The glass fiber can be prepared from continuous lengths of fibers by, for example, a sheathing or wire-coating process, by crosshead extrusion, or by a pultrusion technique. Using these technologies, fibers strands impregnated or coated with a polymer are formed. The fiber can then be cut into a desired length and can optionally be formed into pellets or granules. The fibers can be further processed, e.g., by injection moulding or extrusion processes, into a composition.

In some preferred embodiments, the first cover layer and/or the second cover layer may be or may comprise a continuous glass fiber reinforced tape, e.g. described in WO2021053180A1, hereby incorporated by reference.

Preferably, in case a continuous glass fiber reinforced tape is used, at least two (for example 2, 3, 4, 5, 6, 7, 8, 9 or 10) tape layers are applied in the first cover layer and/or the second cover layer. The stacking of the tape layers is preferably done such that the tapes are in a quasi isotropic lay-up (for example a +0 90°stacking).

Examples of glass fiber reinforced tapes include but are not limited to UDMAX™ tapes and Polystrand™ tapes as commercially available . Furthermore, such tapes are also disclosed in WO2016/142786A1, hereby incorporated by reference, WO2016/142781A1, hereby incorporated by reference, WO2016/142784A1, hereby incorporated by reference.

Thus, the continuous glass fiber reinforced tape may be a fiber-reinforced composite comprising:

a matrix material including polypropylene; and
a non-woven fibrous region comprising a plurality of continuous glass fibers dispersed in the matrix material;
wherein the width and the length of the non-woven fibrous region are substantially equal to the width and the length, respectively, of the fiber-reinforced composite; wherein the non-woven fibrous region has a mean relative fiber area coverage (RFAC) (%) of from 65 to 90 and a coefficient of variance (COV) (%) of from 3 to 20; and wherein each of the plurality of continuous fibers is substantially aligned with the length of the fiber-reinforced composite.

Another example of a continuous glass fiber reinforced tape is for example described in WO2019122317A1, hereby incorporated by reference and in WO2019122318A1, hereby incorporated by reference.

In some preferred embodiments, the first cover layer and/or the second cover layer may be or may comprise a monoaxially drawn polypropylene multilayer film or tape e.g. as described in WO0308190. The film or tape may be of the AB or ABA type, having a stretch ratio of more than 12, having an E-modulus of at least 10 GPa, substantially consisting of a central layer (B) of polypropylene, and one or two other layers (A) of polypropylene, the DSC melting point of the material of the said other layers (A) being lower than the DSC melting point of the material of the said central layer (B), wherein the central layer (B) is between 50 and 99 wt.% of the material and the other layers (A) between 1 and 50 wt.%. It is of advantage to use a monoaxially drawn polypropylene multilayer film or tape as it makes the use of fibers redundant, thereby improving the recyclability.

Typically, the thickness of the first cover layer and/or the second cover layer is smaller than the thickness of the assembly according to the invention, for example the thickness of the first cover layer and/or the second cover layer is at most 90%, at most 70%, at most 50%, at most 30%, at most 10% or at most 5% of the thickness of the assembly according to the invention.

Core layer

The core layer comprises the assembly according to the invention. The assembly according to the invention may be present in the core layer at an amount of 50 to 100 wt% of the core layer.

In some embodiments, the core layer consists of the assembly according to the invention.

In other embodiments, the core layer comprises a part consisting of the assembly according to the invention and further one or more parts consisting of a third composition having a higher density than that of the assembly according to the invention. Such parts consisting of the third composition may be present e.g. at the peripheral part of the core layer and/or multiple such parts may be distributed over the core layer. In some embodiments, the core layer consist of a central part consisting of the assembly according to the invention and a peripheral part at least partly surrounding the circumference of the central part, wherein the peripheral part consists of a third composition. In some embodiments, the peripheral part completely surrounds the circumference of the central part.

The parts consisting of the third composition may function as a reinforcement of the core layer, e.g. for ensuring the attachment of the core layer to the first and the second cover layers. This is particularly useful for a multilayer composite wherein the first cover layer, the second cover layer and the core layer are screwed together. By using a third composition having a higher density than that of the assembly according to the invention for the peripheral part of the core layer, a more secure attachment by screw can be achieved.

Preferably, the third composition comprises polypropylene and optionally glass fibers.

Preferably, the third composition is a non-foamed composition.

Preferably, the third composition has a density of at least 903 g/cm$^3$, preferably at least 904 g/cm$^3$, more preferably at least 905 g/cm$^3$.

Suitable components for the third composition are those described for the first composition and the second composition. The third composition may be the same or different from the first composition and/or the second composition.

The multilayer composite may further comprise a surface layer provided over the first cover layer and/or the second cover layer. The surface layer may for example be a decorative layer and may comprise e.g. PVC, wood.

The present invention further provides a method of manufacturing a sheet comprising a plurality of elongated foamed elements that are arranged next to one another in one plane, the method comprising the steps of:

i) providing at least one foamed sheet having a top surface and a bottom surface, which at least one foamed sheet has been made by a foamed extrusion process, wherein the foamed sheet comprises a polymer composition comprising a polypropylene,

ii) cutting the at least one foamed sheet perpendicular to the top surface and the bottom surface of the foamed sheet, preferably in a direction parallel to an extrusion direction of the foamed sheet or a direction transverse to the extrusion direction, so as to provide the plurality of elongated foamed sheet elements,

wherein, in the sheet as manufactured, abutting side faces of the plurality of elongated foamed elements are bonded to one another, which abutting side faces were part of

the top or the bottom surface of one of the at least one foamed sheet from which the respective elongated foamed element has been made.

In some embodiments of the method of the invention, after the step of cutting, the provided plurality of elongated foamed sheet elements are bonded to one another so as to form the sheet. The bonding may be performed by heating or by using adhesives, preferably by heating.

In some embodiments of the method of the invention, before the step of cutting, multiple foamed sheets are stacked on top of each other and bonded together via their respective top and bottom surfaces, wherein the extrusion directions of the multiple foamed sheets are parallel to each other,

wherein the step of cutting the at least one foamed sheet involves cutting through the stack of the bonded foamed sheets.

The bonding may be performed by heating or by using adhesives, preferably by thermobonding.

The present invention further provides a process for making the multilayer composite according to the present invention, comprising the steps of:

a) arranging the plurality of elongated foamed elements next to one another on the first cover layer,
b) placing the second cover layer on the plurality of elongated foamed elements and
c) bonding the first cover layer, the rod-shaped foamed sheet elements and the second cover layer to each other e.g. by double belt press.

Step c) may also have the function of bonding the plurality of elongated foamed elements to one another at abutting side faces thereof. Therefore the plurality of elongated foamed elements at abutting side faces thereof may or may not be bonded to one another before step c).

Articles

The assembly according to the invention can suitably be used in applications such as building and construction, automotive applications, household applications, such as food packaging and protective packaging; and consumer applications.

In another aspect therefore, the invention relates to an article comprising the assembly of the invention. In yet another aspect, the invention relates to use of the assembly of the invention in an applications such as building and construction, automotive applications, household applications, such as food packaging and protective packaging; and consumer applications.

In another aspect, the invention relates to an article comprising the multilayer composite of the invention. In yet another aspect, the invention relates to use of the multilayer composite of the invention in the preparation of an article. In preferred embodiments, the article is a panel (in particular a sandwich panel) for a building or a transportation or recreation vehicle, in particular a panel selected from the group consisting of a floor panel, a wall panel, a roof panel, an insulation panel, for example an inner wall or front wall panel for a truck, a roof panel of a house, a floor panel for a caravan.

It is noted that the invention relates to the subject-matter defined in the independent claims alone or in combination with any possible combinations of features described herein, preferred in particular are those combinations of features that are present in the claims. It will therefore be appreciated that all combinations of features relating to the compositions according to the invention; all combinations of features relating to the processes according to the invention and all combinations of features relating to the compositions according to the invention and features relating to the processes according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

The invention is now elucidated referring to the drawings in which:

Figure 1 illustrates one embodiment of a method of manufacturing the sheet according to the invention;
Figure 2 illustrates a further embodiment of a method of manufacturing the sheet according to the invention;
Figure 3 illustrates an example of a foamed sheet to be used for obtaining the sheet according to the invention;
Figure 4 illustrates an embodiment of a multilayer composite according to the invention; and
Figure 5 illustrates graphs for determining the Young's modulus (E) and compression stress at yield (compression strength, $\sigma$yield) of a sample according to the invention.

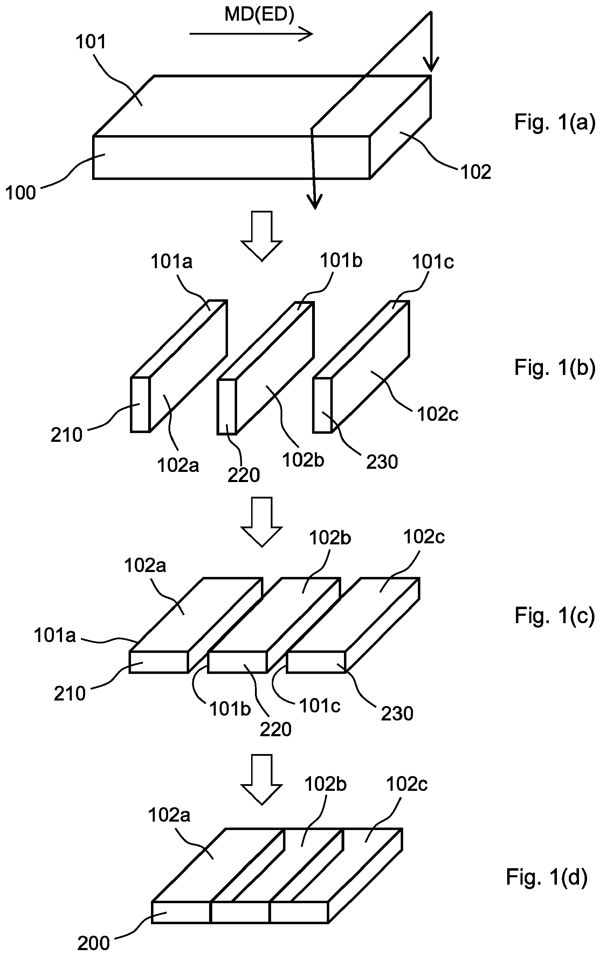

Figure 1(a) illustrates a perspective view of an exemplary foamed sheet 100 according to the invention made by a foamed extrusion process. The extrusion direction is indicated by the arrow in machine direction MD (extrusion direction ED). The foamed sheet 100 has a top surface 101 and a cross section 102 and a bottom surface (not shown). The foamed sheet 100 is cut in the direction parallel to its cross section 102, i.e. perpendicular to the top surface 101 and perpendicular to the extrusion direction.

Figure 1(b) illustrates elongated foamed elements 210, 220, 230 obtained by the cutting described in relation to figure 1(a). The elongated foamed element 210 has a top surface 101a and a cross section 102a; the elongated foamed element 220 has a top surface 101b and a cross section 102b; elongated foamed element 230 has a top surface 101c and a cross section 102c. The elongated foamed elements 210, 220, 230 has a compression strength in the extrusion direction which is larger than the compression strength in the thickness direction.

Figure 1(c) illustrates the elongated foamed elements 210, 220, 230 which have been turned sideways such that the cross sections 102a, 102b, 102c face upwards and the top surfaces 101a, 101b, 101c face sideways.

Figure 1(d) illustrates an embodiment of a sheet 200 made by the elongated foamed elements 210, 220, 230 which have been bonded to each other. The top surface of the sheet 200 is formed of the cross sections 102a, 102b, 102c of the elongated foamed elements 210, 220, 230. The sheet 200 has a compression strength in the thickness direction which corresponds to the compression strength in the extrusion direction of the elongated foamed elements 210, 220, 230. Thus, the sheet 200 has a higher compression strength in the thickness direction than that of the foamed sheet 100.

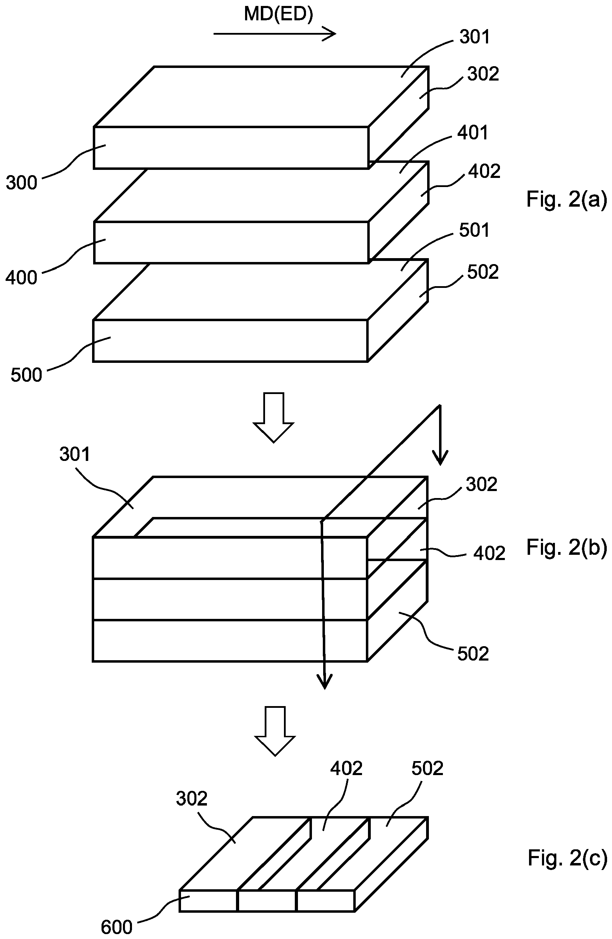

Figure 2(a) illustrates a perspective view of exemplary foamed sheets 300, 400, 500 according to the invention made by a foamed extrusion process. The foamed sheet 300 has a top surface 301 and a cross section 302; the foamed sheet 400 has a top surface 401 and a cross section 402; the foamed sheet 500 has a top surface 501 and a cross section 502.

Figure 2(b) illustrates a stack of foamed sheets 300, 400, 500 formed by stacking them on top of one another and bonding them to one another. The stack is cut in the direction parallel to the cross section 302, 402, 502 i.e. perpendicular to the top surface 301 and perpendicular to the extrusion direction.

Figure 2(c) illustrates a sheet 600 obtained by the cutting of the stack of Figure 2(b). Note that the sheet 600 is illustrated such that the cross sections 302, 402, 502 faces upwards. The sheet 600 has a compression strength in the thickness direction which corresponds to the compression strength in the extrusion direction of the foamed sheets 300, 400, 500. Thus, the sheet 600 has a higher compression strength in the thickness direction than that of the foamed sheets 300, 400, 500.

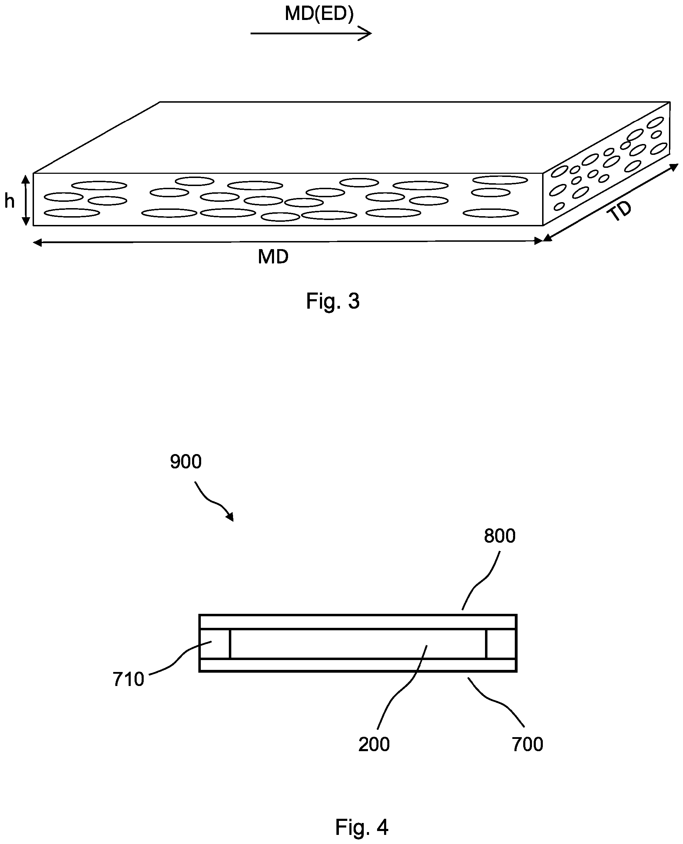

Figure 3 illustrates a perspective view of an exemplary foamed sheet used for making the sheet according to the invention. In the cross section defined by the machine direction and the thickness direction, elliptical pores are visible which are elongated in the machine direction. In the cross section defined by the transverse direction and the thickness direction, elliptical pores are visible which are elongated in the transverse direction. It can therefore be understood that the pores in this exemplary foamed sheet have an ellipsoidal shape.

Figure 4 illustrates a cross section of an exemplary multilayer composite 900 according to the invention. The multilayer composite 900 comprises a bottom cover layer 700 and a top cover layer 800 and a core layer between the bottom cover layer 700 and the top cover layer 800, wherein the core layer comprises the sheet 200 and a peripheral part 710.

The sheet 200 is made of foamed propylene and thus has a low density. The bottom cover layer 700 and the top cover layer 800 as well as the peripheral part 710 is made of a non-foamed composition comprising propylene and optionally glass fibers, and may be screwed together.

Figure 5 illustrates graphs for determining the Young's modulus (E) and compression stress at yield (compression strength, $\sigma$yield) of a sample according to the invention.

The invention is now elucidated by way of the following examples, without however being limited thereto.

Examples

Measurement methods

Melt flow rate (MFR)

The melt flow rate of the polymers was determined in accordance with ASTM D1238 (2013) at a temperature of 230°C ($MFR_{230}$) under a load of 2.16 kg.

Density

The density of the polymers was determined in accordance with ASTM D792 (2008).

Melting temperature (Tm)

The melting temperature of the polymers was measured using a differential scanning calorimeter (DSC, TA Instruments Q20) on the second heating cycle using a heating rate of 10°C/min and a cooling rate of 10°C/min and a temperature range of -40 to 200°C. In case a polymer has multiple melting temperatures, the highest melting temperature is reported as the melting temperature (Tm).

Melt strength

Melt strength was measured according to ISO standard 16790:2005. Melt strength is defined as the maximum (draw-down) force (in cN) by which a molten thread can be drawn before it breaks, e.g. during a Rheotens measurement. Measurements were done on a Göttfert Rheograph 6000 at a temperature of 200 °C with a setup like shown in figure 1 of ISO standard 16790:2005. The rheometer has an oven with a diameter of 12 mm. A capillary of 20 mm length and 2 mm width was used. The entrance angle of the capillary was 180° (flat). The piston in the rheometer moved with a velocity of 0.272 mm/s to obtain an exit velocity v0, of 9.8 mm/s. After filling the rheometer, the melt was held in the rheometer for 5 minutes, to stabilize the temperature and fully melt the polymer. The strand that exits the capillary was drawn with a Rheotens II from Goettfert with an acceleration of 6 mm/s$^2$ until breakage occurred. The distance between the exit of the capillary and the uptake wheels of the Rheotens II (= draw length) was 100 mm.
The pressure required to push the melted polymer through the capillary, the maximum drawing force (= Melt strength) and the maximum draw ratio at breakage were recorded.

Open cell content

The open cell content was determined by using a Quantachrome Pentapyc 5200e gas pycnometer using a method based on ASTM D6226-10. The volume from the external dimensions of the sample was determined by using the Archimedes' principle as described for the determination of the volume of the expanded polypropylene beads above. It was assumed that the uptake of water by the sample can be neglected. After drying the sample from adhering water, the sample volume ($V_{SPEC}$) was determined by the pycnometer according ASTM D6226-10 at different pressures.
All applied pressures were below 0.1 bar to minimize compression of the foam.
The sample volume of the foam was plotted against the applied pressures (0.090 bar; 0.075 bar, 0.060 bar, 0.045 bar, 0.035bar, 0.020 bar and 0.010 bar). A straight line was fit through the measurement points, using linear regression. The interception of the linear regression line with the Y-axis at p = 0 bar is the volume ($V_{SPEC\_0}$) used in equation below.
The open cell content $V_{open}$ (%) was calculated using the following formula:

$$O_V = [(V - V_{SPEC\_0})/V] * 100$$

wherein:

    Ov = open cell content [%]
    V = Geometric volume
    $V_{SPEC\_0}$ = Volume sample interpolated to a pressure of 0 bar

Cell size

The cell sizes in the thickness direction (H), the extrusion direction (MD) and the transverse direction (TD) were measured as follows:
With the use of a sharp razorblade a cut of approximately 3 mm in depth was made over the width of the foamed sample. The sample was then cooled in a liquid nitrogen bath for 5 minutes. The foam was carefully broken along the pre-cut. Then a section of the foam was observed with the use of microscope manufactured by Zeiss at a magnification 25x and an image was obtained. A horizontal line was drawn with an equivalent of 5000microns on the image over the cells. This horizontal line represents the direction MD or TD depending on the analyzed foam sample direction. The number of cells passing through the lines were counted. The cell size and an average cell size was calculated 5000microns / n. For all the foams different images of the different directions were prepared, meaning MD/PD and the TD/PD direction. For each analysis five different images were analyzed and the average cell size was of the 5 images was regarded as average cell size in the specific analyzed direction.

Compression test -Young's Modulus and compression stress at yield

Young's modulus (E) (compressive modulus of elasticity in MPa) and compression stress at yield (compressive strength, σyield in MPa) in the thickness direction (H), the extrusion direction (MD) and the transverse direction (TD) were determined with the use of a ZwickRoell tensile testing machine using ISO844:2014. Samples of 20x20x20mm were taken. 1N pre-load was applied before measurement. During the measurement, the applied compression speed was 5 mm/min until a compression of 80% was reached. The compression stress during compression was recorded. Young's modulus (E) was determined as the initial slope in the elastic region of the stress-strain response of the sample. The compression stress at yield (σyield) was determined after the end of the elastic region. Depending on the different compression behavior of the samples the compression stress at yield was determined as shown in graphs of Figure 5.

Materials

The properties of the polypropylenes used as listed below in Table 1.

Table 1

|  |  | PP-UMS | hPP |  |
|---|---|---|---|---|
| SABIC commercial name |  | PP UMS 561P | 527K |  |
| Type of polypropylene |  | high melt strengthpropylene homopolymer | propylene homopolymer |  |
| $MFR_{230}$ | g/10min |  | 2.7 | 3.0 |
| Density | kg/m$^3$ |  | 905 | 905 |
| Tm | °C |  | 162 | 165 |
| melt strength | cN |  | 71 |  |

**Talc:** stands for POLYBATCH® FPE 50 T, which is a 50% masterbatch of talcum in polyethylene and which is commercially available from LyondellBasell.
**PBA:** stands for physical blowing agent. In the below foaming experiments, iso-butane was used as physical blowing agent.

Preparation of foamed polypropylene sheet by a foam extrusion process

For examples E1 - E15, the components shown in Table 2 were dosed in a co-rotating twin-screw extruder. The extruder was a 30mm double screw foam extruderfrom Theysohn having a length over diameter ratio (L/D) of 40. This extruder consists of nine electrical heating zones equipped with water cooling followed by a cooling section a static mixer and an adjustable slit die. The polymer and talc were dosed at the start of the extruder.
The molten mixture as obtained was then cooled using a melt cooler set at 165°C. After cooling, the melt was extruded through a slit die having an adjustable die gap set at a temperature of 175°C. The die gap was set to have a resultant die pressure of 25 bar at a throughput of 15 kg/hour. A foamed extruded sheet was obtained after cooling by the use of a water-cooled calibrator unit.
For each different PBA dosage, 3 different pull-off speeds were used to improve the orientation in the sample. The lowest pull-off speed for each PBA dosage is the foam exit speed at the die. The pull-off speed was increased as compared to the foam exit speed at the die in steps of 0.3 "scale" as shown in table 2.
Variables:

Foam density; 50, 75, 100, 125 & 150kg/m3
Pull-off speed; low, medium, high

Table 2

| | | E1 | E2 | E3 | E4 | E5 | E6 | E7 | E8 | E9 | E10 | E11 | E12 | E13 | E14 | E15 |
|---|---|---|---|---|---|---|---|---|---|---|---|---|---|---|---|---|
| PP-UMS | wt% | 68.5 | 68.5 | 68.5 | 68.5 | 68.5 | 68.5 | 68.5 | 68.5 | 68.5 | 68.5 | 68.5 | 68.5 | 68.5 | 68.5 | 68.5 |
| hPP | wt% | 30 | 30 | 30 | 30 | 30 | 30 | 28.5 | 28.5 | 28.5 | 28.5 | 28.5 | 28.5 | 28.5 | 28.5 | 28.5 |
| Talc | wt% | 1.5 | 1.5 | 1.5 | 1.5 | 1.5 | 1.5 | 3 | 3 | 3 | 3 | 3 | 3 | 3 | 3 | 3 |
| Iso-butane* | wt% | 5 | 5 | 5 | 3 | 3 | 3 | 2.56 | 2.56 | 2.56 | 2.08 | 2.08 | 2.08 | 1.8 | 1.8 | 1.8 |
| Throughput | [kg/h] | 15 | 15 | 15 | 15 | 15 | 15 | 15 | 15 | 15 | 15 | 15 | 15 | 15 | 15 | 15 |
| Screws peed | [RPM] | 100 | 100 | 100 | 100 | 100 | 100 | 100 | 100 | 100 | 100 | 100 | 100 | 100 | 100 | 100 |
| Melt cooler | [°C] | 165 | 165 | 165 | 165 | 165 | 165 | 165 | 165 | 165 | 165 | 165 | 165 | 165 | 165 | 165 |
| Die | [°C] | 175 | 175 | 175 | 175 | 175 | 175 | 175 | 175 | 175 | 175 | 175 | 175 | 175 | 175 | 175 |
| Die pressure | [bar] | 25 | 25 | 25 | 25 | 25 | 25 | 25 | 25 | 25 | 25 | 25 | 25 | 25 | 25 | 25 |
| Pulling speed | [-] | 1 | 1.3 | 1.6 | 0.65 | 0.95 | 1.25 | 0.55 | 0.85 | 1.15 | 0.45 | 0.75 | 1.05 | 0.4 | 0.7 | 1 |
| Pulling speed | [m/s] | 0.112 | 0.143 | 0.175 | 0.075 | 0.106 | 0.138 | 0.064 | 0.096 | 0.128 | 0.053 | 0.085 | 0.117 | 0.048 | 0.08 | 0.112 |
| Calibrator weight | [kg] | 3.6 | 3.6 | 3.6 | 3.6 | 3.6 | 3.6 | 2.4 | 2.4 | 2.4 | 2.4 | 0 | 0 | 0 | 0 | 0 |
| Foam density | [kg/m³] | 51 | 52 | 55 | 77 | 77 | 87 | 96 | 96 | 107 | 122 | 126 | 126 | 143 | 145 | 145 |
| Open cell | [%] | 12 | 7 | 4 | 0 | 1 | 7 | 2 | 2 | 10 | 0 | 1 | 2 | 0 | 0 | 0 |

NA: not applicable
*Sum of polymers and talc add up to 100wt% total. Amount of iso-butane is with respect to the sum of polymers and talc.

Various properties were measured as shown in Table 3.

Table 3.

| | | E1 H | E1 TD | E1 MD | E2 H | E2 TD | E2 MD | E3 H | E3 TD | E3 MD |
|---|---|---|---|---|---|---|---|---|---|---|
| Foam Density | [kg/m$^3$] | 51 | | | 52 | | | 55 | | |
| Open cell content | [%] | 12 | | | 7 | | | 4 | | |
| Cell size MD | [μm] | 935.8 | | | 962.1 | | | 1.122.7 | | |
| Cell aspect ratio MD/H | [-] | 1.00 | | | 1.15 | | | 1.37 | | |
| Cell size TD | [μm] | 888.8 | | | 887.4 | | | 819.2 | | |
| σyield | [kPa] | NA | 171.0 | 467.0 | NA | 126.0 | 545.0 | NA | NA | 545.0 |
| Young's modulus | [kPa] | 13.8 | 39.9 | 215.5 | 13.0 | 35.3 | 236.8 | 10.0 | 21.1 | 250.3 |
| | | E4 H | E4 TD | E4 MD | E5 H | E5 TD | E5 MD | E6 H | E6 TD | E6 MD |
| Foam Density | [kg/m$^3$] | 77 | | | 77 | | | 87 | | |
| Open cell content | [%] | 0 | | | 1 | | | 7 | | |
| Cell size MD | [μm] | 661.3 | | | 952.3 | | | 1056.7 | | |
| Cell aspect ratio MD/H | [-] | 0.91 | | | 1.37 | | | 1.54 | | |
| Cell size TD | [μm] | 579.4 | | | 572.2 | | | 468.5 | | |
| σyield | [kPa] | NA | 307.0 | 630.0 | NA | 232.0 | 878.0 | NA | NA | 1001.0 |
| Young's modulus | [kPa] | 32.7 | 73.2 | 244.4 | 15.5 | 54.6 | 276.3 | 14.0 | 35.3 | 375.8 |

NA: not applicable

| | | E7 H | E7 TD | E7 MD | E8 H | E8 TD | E8 MD | E9 H | E9 TD | E9 MD |
|---|---|---|---|---|---|---|---|---|---|---|
| Foam Density | [kg/m$^3$] | 96 | 96 | 96 | 96 | 96 | 96 | 107 | 107 | 107 |
| Open cell content | [%] | 2 | 2 | 2 | 2 | 2 | 2 | 10 | 10 | 10 |
| Cell size MD | [μm] | 480.1 | | | 507.7 | | | 535.8 | | |
| Cell AR ratio MD/H | [-] | 1.22 | | | 1.56 | | | 1.75 | | |
| Cell size TD | [μm] | 462.3 | | | 449.2 | | | 443.9 | | |
| compression strength | [kPa] | NA | 404.0 | 710.0 | NA | 351.0 | 1139.0 | NA | NA | 1345.0 |
| Young's modulus | [kPa] | 31.2 | 116.1 | 237.6 | 45.6 | 107 | 412.5 | 18.4 | 57.9 | 430.4 |
| | | E10 H | E10 TD | E10 MD | E11 H | E11 TD | E11 MD | E12 H | E12 TD | E12 MD |
| Foam Density | [kg/m$^3$] | 122 | | | 126 | | | 126 | | |
| Open cell content | [%] | 0 | | | 1 | | | 2 | | |
| Cell size MD | [μm] | 397.5 | | | 455.3 | | | 518.7 | | |
| Cell AR ratio MD/H | [-] | 0.91 | | | 1.25 | | | 1.67 | | |
| Cell size TD | [μm] | 490.2 | | | 406.7 | | | 369.9 | | |
| σyield | [kPa] | NA | 666.0 | 1075.0 | NA | 420.0 | 1545.0 | NA | NA | 1961.0 |
| Young's modulus | [kPa] | 31.7 | 171.8 | 330.9 | 24.7 | 112 | 444.6 | 31.5 | 76.9 | 634.1 |

(continued)

| | | E13 H | E13 TD | E13 MD | E14 H | E14 TD | E14 MD | E15 H | E15 TD | E15 MD |
|---|---|---|---|---|---|---|---|---|---|---|
| Foam Density | [kg/m³] | 143 | | | 145 | | | 145 | | |
| Open cell content | [%] | 0 | | | 0 | | | 0 | | |
| Cell size MD | [μm] | 385.6 | | | 450.2 | | | 497.6 | | |
| Cell aspect ratio MD/H | [-] | 1.03 | | | 1.35 | | | 1.67 | | |
| Cell size TD | [μm] | 468.7 | | | 403.7 | | | 407.7 | | |
| σyield | [kPa] | NA | 1142.0 | 1620.0 | NA | 750.0 | 2418.0 | NA | NA | 2977.0 |
| Young's modulus | [kPa] | 48.7 | 301.3 | 503.5 | 43.7 | 132.1 | 807 | 24.4 | 168.5 | 1005.6 |

From the tables, it can be seen that the compression stress at yield and Young's modulus in the extrusion direction (MD) is the highest, followed by the compression modulus in the transverse direction (TD), followed by the compression modulus in the height direction (H).

From the cell sizes determined for different directions, it can be understood that the cells have a shape elongated in the machine direction

Inventors have found that a sheet having a large compression strength in the thickness direction can be obtained by cutting the foamed extruded sheet perpendicular to the extrusion direction to obtain beams and turning them sideways. Such sheet obtained by a series of such beams bonded together has a compression strength in the thickness direction corresponding to the compression strength of the foamed extruded sheet in the extrusion direction.

Sandwich panels

A foamed sheet was obtained by a foamed extrusion process of a polypropylene composition in a similar manner as described above.

In comparative experiment A, a three-layer composite was made using the foamed sheet without cutting it into beams. On top of a bottom layer made of a glass-fiber filled polypropylene composition, the foamed sheet was provided. Further on top of the foamed sheet, a top layer made of a glass-fiber filled polypropylene composition was placed. The three-layer structure was subjected to double belt press to obtain a three-layer composite. The three-layer composite obtained thus has a thickness direction which is the same as the thickness direction of the foamed sheet obtained by the foamed extrusion process.

In example B according to the invention, a three-layer composite was made using a sheet made from the foamed sheet by cutting it into beams and rearranging them.

The foamed sheet was sliced perpendicular to the extrusion direction into beam-like elongated elements. The beam-like elongated elements were turned sideways and placed side-by-side such that the surfaces made by the cutting face upward and downward.

On top of a bottom layer made of a glass-fiber filled polypropylene composition, the newly formed sheet was provided. Further on top of this sheet, a top layer made of a glass-fiber filled polypropylene composition was placed. The heated three-layer structure was subjected to double belt press to obtain a three-layer composite.

The compression strength of the three-layer composites of comparative experiment A and example B according to the invention was measured. The compression strength of the three-layer composite of example B was substantially larger than those of the three-layer composite of comparative experiment A.

**Claims**

1. An assembly comprising a plurality of elongated foamed elements that are arranged next to one another in one plane and bonded to one another at abutting side faces thereof,

   wherein the elongated foamed elements have been made by cutting at least one foamed sheet having a top surface and a bottom surface, the at least one foamed sheet having been prepared by a foamed extrusion process and the foamed sheet comprises a polymer composition comprising polypropylene,
   wherein the cutting is perpendicular to the top surface and the bottom surface of the at least one foamed sheet, preferably in a direction parallel to an extrusion direction of the foamed sheet or a direction transverse to the extrusion direction, wherein the assembly has a top surface and a bottom surface which are formed of surfaces of the elongated foamed elements that are perpendicular to the top or the bottom surface of one of the at least one foamed sheet from which the respective elongated foamed element has been made, wherein preferably the assembly is a sheet.

2. The assembly according to claim 1, wherein the elongated foamed elements have been made by cutting the at least one foamed sheet in the direction transverse to the extrusion direction, preferably wherein the sheet has a compression stress at yield in the thickness direction of at least 100 kPa, more preferably at least 300 kPa, more preferably at least 500 kPa, as determined by ISO 844 (2014).

3. The assembly according to any one of the preceding claims, wherein the polymer composition comprises a high melt strength polypropylene wherein the high melt strength polypropylene has a melt strength $\geq$ 30 cN, more preferably $\geq$ 35 cN, more preferably $\geq$ 40 cN, more preferably $\geq$ 45 cN, more preferably $\geq$ 50 cN, more preferably $\geq$ 55 cN, even more preferably $\geq$ 60 cN, most preferably $\geq$ 65 cN, wherein the melt strength is determined in accordance with ISO 16790:2005 at a temperature of 200°C, using a cylindrical capillary having a length of 20mm and a width of 2mm, a starting velocity v0 of 9.8mm/s and an acceleration of 6mm/s$^2$.

4. The assembly according to any one of the preceding claims, wherein the foamed sheet has been prepared by a process comprising the sequential steps of:

a) providing the polymer composition,
b) adding a blowing agent to the polymer composition, for example wherein the blowing agent is added in an amount $\geq$ 0.10 wt% and $\leq$ 20 wt% based on the polymer composition,
c) subjecting the mixture of the polymer composition and the blowing agent to a foam extrusion process to form the foamed sheet and optionally
d) stretching the foamed sheet in at least one direction.

5. A kit of parts comprising a plurality of elongated foamed elements made by cutting at least one foamed sheet having a top surface and a bottom surface, the at least one foamed sheet having been prepared by a foamed extrusion process and the foamed sheet comprises polypropylene, wherein the cutting is perpendicular to the top surface and the bottom surface of the at least one foamed sheet, preferably in a direction parallel to an extrusion direction of the foamed sheet or a direction transverse to the extrusion direction.

6. A multilayer composite comprising a core layer comprising the assembly according to any one of claims 1 to 4 and a first cover layer provided on the core layer, wherein preferably the multilayer composite further comprises a second cover layer and the core layer is provided between the first cover layer and the second cover layer, wherein the first cover layer comprises a first composition having a density of at least 903 g/cm$^3$ and comprising polypropylene and optionally reinforcement fibers such as glass fibers and the optional second cover layer comprises a second composition having a density of at least 903 g/cm$^3$ and comprising polypropylene and optionally reinforcement fibers such as glass fibers, preferably wherein the multilayer composite has a compression stress at yield in the thickness direction of at least 100 kPa, more preferably at least 300 kPa, more preferably at least 500 kPa, as determined by ISO 844 (2014).

7. The multilayer composite according to claim 6, wherein the sheet of the core layer is directly bonded to the first cover layer and the optional second cover layer without an adhesive layer.

8. The multilayer composite according to claim 6 or 7, wherein the first cover layer and/or the optional second cover layer is or comprises a continuous glass fiber reinforced tape or a monoaxially drawn polypropylene multilayer film or tape.

9. The multilayer composite according to any one of claims 6-8, wherein the core layer comprises a part consisting of the sheet and further one or more parts consisting of a third composition having a density of at least 903 g/cm$^3$ and comprising polypropylene and optionally reinforcement fibers such as glass fibers.

10. A panel for a building or a transportation or recreation vehicle comprising the multilayer composite according to any one of claims 6-9, in particular a sandwich panel.

11. The panel according to claim 10, wherein the panel is selected from the group consisting of a floor panel, a wall panel, a roof panel, an insulation panel, for example an inner wall panel or a front wall panel for a truck, a roof panel of a house, a floor panel for a caravan.

12. A method of manufacturing an assembly comprising a plurality of elongated foamed elements that are arranged next to one another in one plane, wherein preferably the assembly is a sheet, the method comprising the steps of:

i) providing at least one foamed sheet having a top surface and a bottom surface, which at least one foamed sheet has been made by a foamed extrusion process and wherein the foamed sheet comprises a polymer composition comprising polypropylene,

ii) cutting the at least one foamed sheet perpendicular to the top surface and the bottom surface of the foamed sheet, preferably in a direction parallel to an extrusion direction of the foamed sheet or a direction transverse to the extrusion direction, so as to provide the plurality of elongated foamed sheet elements, wherein, in the assembly as manufactured, abutting side faces of the plurality of elongated foamed elements are bonded to one another and the assembly has a top surface and a bottom surface which are formed of surfaces of the elongated foamed elements that are perpendicular to the top or the bottom surface of one of the at least one foamed sheet from which the respective elongated foamed element has been made.

13. The method according to claim 12, wherein after the step of cutting, the provided plurality of elongated foamed sheet elements are bonded to one another so as to form the assembly.

14. The method according to claim 12, wherein before the step of cutting, multiple foamed sheets are stacked on top of each other and bonded together via their respective top and bottom surfaces, wherein the extrusion directions of the multiple foamed sheets are parallel to each other,

wherein the step of cutting the at least one foamed sheet involves cutting through the stack of the bonded foamed sheets.

15. A process for making the multilayer composite according to any one of claims 6 to 9, comprising the steps of:

a) arranging the plurality of elongated foamed elements next to one another on the first cover layer,
b) optionally placing the second cover layer on the plurality of elongated foamed elements and
c) bonding the first cover layer, the rod-shaped foamed sheet elements and the optional second cover layer to each other e.g. by double belt press.

MD(ED)

101

100

102

Fig. 1(a)

101a
101b
101c

210

102a

220

102b

230

102c

Fig. 1(b)

102a
102b
102c

101a

210

101b

220

101c

230

Fig. 1(c)

102a
102b
102c

200

Fig. 1(d)

MD(ED)

Fig. 2(a)

Fig. 2(b)

Fig. 2(c)

MD(ED)

Fig. 3

Fig. 4

Fig. 5

Europäisches
Patentamt

European
Patent Office

Office européen
des brevets

# EUROPEAN SEARCH REPORT

**Application Number**

EP 21 21 7381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 474 431 A (GURIT [GB]) 20 April 2011 (2011-04-20) | 1,5, 12-15 | INV. B29C44/56 |
| Y | * page 8, line 29 - page 9, line 10; | 3,4 | B32B38/00 |
| A | figures 3,4 * * page 12, line 6 - line 16; figures 6-16 * | 2,6-11 | B29D99/00 |
| | ----- | | ADD. B29L9/00 |
| Y | EP 2 653 287 A1 (URSA INSULATION SA [ES]) 23 October 2013 (2013-10-23) | 1,3-5, 12-15 | |
| A | * paragraphs [0029], [0054] - [0059]; figures 1,2,3, 4, 5 * | 2,6-11 | |
| | ----- | | |
| Y | US 2011/165363 A1 (WOLF THOMAS [CH] ET AL) 7 July 2011 (2011-07-07) | 1,3-5, 12-15 | |
| A | * paragraphs [0002], [0004], [0007], [0014], [0015], [0039], [0042]; figures 1-6 * | 2,6-11 | |
| | ----- | | |
| Y | US 2020/325298 A1 (TRASSL CHRISTIAN [DE] ET AL) 15 October 2020 (2020-10-15) | 3 | |
| A | * paragraph [0050] * | 1,2,4-15 | TECHNICAL FIELDS SEARCHED (IPC) |
| | ----- | | B29C |
| Y | RU 2 133 671 C1 (DOW CHEMICAL CO [US]) 27 July 1999 (1999-07-27) | 4 | B29L |
| A | * paragraphs [0041], [0042] * | 1-3,5-15 | B32B B29D |
| | ----- | | |
| Y | WO 2006/094163 A1 (WELLMAN INC [US]; EDWARDS WALTER LEE [US] ET AL.) 8 September 2006 (2006-09-08) | 4 | |
| A | * paragraph [0058] * | 1-3,5-15 | |
| | ----- | | |
| A | US 9 533 468 B2 (AIREX AG [CH]) 3 January 2017 (2017-01-03) * column 8, line 16 - line 33 * | 1-15 | |
| | ----- | | |
| | -/-- | | |

The present search report has been drawn up for all claims

| Place of search | Date of completion of the search | Examiner |
|---|---|---|
| The Hague | 1 June 2022 | Tortosa Masiá, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................
& : member of the same patent family, corresponding document

EPO FORM 1503 03.82 (P04C01)

EP 4 155 046 A1

| | Europäisches Patentamt / European Patent Office / Office européen des brevets | **EUROPEAN SEARCH REPORT** | **Application Number** EP 21 21 7381 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 906 137 A (BAUER PETER) 16 September 1975 (1975-09-16) * column 4, line 17 – line 35; figures 1-3 * | 1-15 | |
| A | US 2010/254819 A1 (RAKUTT DIETMAR [CH] ET AL) 7 October 2010 (2010-10-07) * paragraphs [0043], [0083] * | 1-15 | |
| A | WO 2020/074678 A1 (MITSUBISHI CHEMICAL ADVANCED MAT COMPOSITES AG [CH]) 16 April 2020 (2020-04-16) * page 7, line 8 – line 16; figures 3,4 * | 1-15 | |

**TECHNICAL FIELDS SEARCHED (IPC)**

The present search report has been drawn up for all claims

| Place of search | Date of completion of the search | Examiner |
|---|---|---|
| The Hague | 1 June 2022 | Tortosa Masiá, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 21 21 7381

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2022

| Patent document cited in search report | | Publication date | Patent family member(s) | | Publication date |
|---|---|---|---|---|---|
| GB 2474431 | A | 20-04-2011 | CN | 102656108 A | 05-09-2012 |
| | | | EP | 2488433 A1 | 22-08-2012 |
| | | | GB | 2474431 A | 20-04-2011 |
| | | | US | 2012248645 A1 | 04-10-2012 |
| | | | WO | 2011045335 A1 | 21-04-2011 |
| EP 2653287 | A1 | 23-10-2013 | NONE | | |
| US 2011165363 | A1 | 07-07-2011 | AT | 508865 T | 15-05-2011 |
| | | | BR | PI0917422 A2 | 15-03-2016 |
| | | | CN | 102143840 A | 03-08-2011 |
| | | | DK | 2153982 T3 | 05-09-2011 |
| | | | DK | 2307193 T3 | 22-04-2013 |
| | | | EP | 2153982 A1 | 17-02-2010 |
| | | | EP | 2307193 A1 | 13-04-2011 |
| | | | ES | 2365101 T3 | 22-09-2011 |
| | | | ES | 2400044 T3 | 05-04-2013 |
| | | | PT | 2153982 E | 17-08-2011 |
| | | | PT | 2307193 E | 25-03-2013 |
| | | | US | 2011165363 A1 | 07-07-2011 |
| | | | WO | 2010012353 A1 | 04-02-2010 |
| US 2020325298 | A1 | 15-10-2020 | AU | 2018373661 A1 | 16-07-2020 |
| | | | BR | 112020010391 A2 | 20-10-2020 |
| | | | CA | 3083397 A1 | 31-05-2019 |
| | | | CN | 111819069 A | 23-10-2020 |
| | | | EP | 3717211 A1 | 07-10-2020 |
| | | | JP | 2021504189 A | 15-02-2021 |
| | | | KR | 20200087258 A | 20-07-2020 |
| | | | RU | 2020120918 A | 29-12-2021 |
| | | | SG | 11202004813Y A | 29-06-2020 |
| | | | TW | 201936360 A | 16-09-2019 |
| | | | US | 2020325298 A1 | 15-10-2020 |
| | | | WO | 2019101703 A1 | 31-05-2019 |
| | | | ZA | 202003629 B | 28-07-2021 |
| RU 2133671 | C1 | 27-07-1999 | AP | 569 A | 25-11-1996 |
| | | | AT | 189647 T | 15-02-2000 |
| | | | AU | 681685 B2 | 04-09-1997 |
| | | | BG | 62282 B1 | 30-07-1999 |
| | | | CA | 2166120 A1 | 05-01-1995 |
| | | | CN | 1128513 A | 07-08-1996 |
| | | | CZ | 284599 B6 | 13-01-1999 |
| | | | DE | 69422986 T2 | 19-10-2000 |
| | | | EP | 0706452 A1 | 17-04-1996 |
| | | | ES | 2142949 T3 | 01-05-2000 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 21 21 7381

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2022

| Patent document cited in search report | | Publication date | Patent family member(s) | | Publication date |
|---|---|---|---|---|---|
| | | | FI | 956285 A | 14-02-1996 |
| | | | HK | 1014686 A1 | 30-09-1999 |
| | | | HU | 218821 B | 28-12-2000 |
| | | | NZ | 268517 A | 20-12-1996 |
| | | | PL | 312578 A1 | 29-04-1996 |
| | | | RU | 2133671 C1 | 27-07-1999 |
| | | | TW | 305859 B | 21-05-1997 |
| | | | US | 5362436 A | 08-11-1994 |
| | | | US | 5364696 A | 15-11-1994 |
| | | | WO | 9500320 A1 | 05-01-1995 |
| WO 2006094163 A1 | | 08-09-2006 | TW | 200706579 A | 16-02-2007 |
| | | | WO | 2006094163 A1 | 08-09-2006 |
| US 9533468 B2 | | 03-01-2017 | AU | 2013241882 A1 | 18-09-2014 |
| | | | BR | 112014021158 B1 | 30-03-2021 |
| | | | CA | 2867971 A1 | 03-10-2013 |
| | | | CN | 104203559 A | 10-12-2014 |
| | | | DE | 102012102689 A1 | 26-09-2013 |
| | | | DK | 2670591 T3 | 20-10-2014 |
| | | | EP | 2670591 A1 | 11-12-2013 |
| | | | ES | 2515745 T3 | 30-10-2014 |
| | | | PL | 2670591 T3 | 30-01-2015 |
| | | | PT | 2670591 E | 14-10-2014 |
| | | | US | 2015125686 A1 | 07-05-2015 |
| | | | WO | 2013144130 A1 | 03-10-2013 |
| US 3906137 A | | 16-09-1975 | NONE | | |
| US 2010254819 A1 | | 07-10-2010 | AT | 330787 T | 15-07-2006 |
| | | | AU | 2003258619 A1 | 30-04-2004 |
| | | | CA | 2496492 A1 | 25-03-2004 |
| | | | CY | 1107471 T1 | 13-03-2013 |
| | | | DK | 1536944 T3 | 23-10-2006 |
| | | | EP | 1393892 A1 | 03-03-2004 |
| | | | EP | 1536944 A1 | 08-06-2005 |
| | | | ES | 2265599 T3 | 16-02-2007 |
| | | | PT | 1536944 E | 30-11-2006 |
| | | | SI | 1536944 T1 | 31-12-2006 |
| | | | US | 2006257612 A1 | 16-11-2006 |
| | | | US | 2008105991 A1 | 08-05-2008 |
| | | | US | 2010254819 A1 | 07-10-2010 |
| | | | US | 2011091715 A1 | 21-04-2011 |
| | | | US | 2011287248 A1 | 24-11-2011 |
| | | | WO | 2004024434 A1 | 25-03-2004 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 21 21 7381

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2022

| Patent document cited in search report | | Publication date | Patent family member(s) | | Publication date |
|---|---|---|---|---|---|
| WO 2020074678 | A1 | 16-04-2020 | CN | 113396046 A | 14-09-2021 |
| | | | EP | 3863837 A1 | 18-08-2021 |
| | | | JP | 2022508723 A | 19-01-2022 |
| | | | US | 2021347158 A1 | 11-11-2021 |
| | | | WO | 2020074678 A1 | 16-04-2020 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009003930 A1
- US 6664317 B
- US 6872764 B
- WO 2017021292 A
- WO 2021053180 A1
- WO 2016142786 A1
- WO 2016142781 A1
- WO 2016142784 A1
- WO 2019122317 A1
- WO 2019122318 A1
- WO 0308190 A

**Non-patent literature cited in the description**

- **MOORE, E. P.** Polypropylene Handbook. Polymerization, Characterization, Properties, Processing, Applications. Hanser Publishers, 1996
- **GENDRON.** *Thermoplastic foam Processing,* 2005, 209
- **GENDRON.** *Thermoplastic foam Processing,* 2005, 31-149
- **H. E. NAGUIB ; C. B. PARK ; N. REICHELT.** Fundamental foaming mechanisms governing the volume expansion of extruded polypropylene foams. *Journal of Applied Polymer Science,* 2004, vol. 91, 2661-2668
- **S. T. LEE.** Foam Extrusion. Technomic Publishing, 2000